Europäisches Patentamt

European Patent Office

Office européen des brevets

(11) Veröffentlichungsnummer: **0 247 278**

**A1**

## EUROPÄISCHE PATENTANMELDUNG

(21) Anmeldenummer: **87101525.1**

(22) Anmeldetag: **05.02.87**

(51) Int. Cl.⁴: **G05D 23/275 , F24H 9/20**

(30) Priorität: **27.05.86 DE 3617735**

(43) Veröffentlichungstag der Anmeldung:
**02.12.87 Patentblatt 87/49**

(84) Benannte Vertragsstaaten:
**AT BE CH DE GB LI**

(71) Anmelder: **KKW Kulmbacher Klimageräte-Werk GmbH Am Goldenen Feld 18 D-8650 Kulmbach(DE)**

(72) Erfinder: **Rehor, Peter, Dipl.-Ing. Meranierring 38 D-8580 Bayreuth(DE)**

(74) Vertreter: **Mehl, Ernst, Dipl.-Ing. et al Postfach 22 01 76 D-8000 München 22(DE)**

(54) **Schaltung für ein elektrisches Wärmespeicher-Heizgerät.**

(57) Offenbart wird eine Schaltung für ein elektrisches Wärmespeicher-Heizgerät, bei dem ein Motor (1) eines Entladegebläses zwei Drehzahlstufen aufweist. Die erste Drehzahlstufe ist beim höchsten Ladestand des Wärmespeichers eingeschaltet und derart bemessen, daß ein zugelassener Geräuschpegel gerade noch nicht überschritten ist. Diese Drehzahlstufe bleibt während einer mit fortschreitender Entladung des Wärmespeichers einhergehenden, den Geräuschpegel mindernden Absenkung der Drehzahl des Motors (1) bis zu einem vorbestimmten Ladestand eingeschaltet. Ab dann wird der Motor (1) auf die zweite Drehzahlstufe geschaltet. Diese ist so eingestellt, daß der beim höchsten Ladestand des Wärmespeichers gegebene Geräuschpegel wieder erreicht wird. Die Schaltung wird angewendet, wenn während einer Entladezeit Nachladungen des Wärmespeichers möglich sind.

FIG 1

EP 0 247 278 A1

## Schaltung für ein elektrisches Wärmespeicher-Heizgeräte

Die Erfindung bezieht sich auf eine Schaltung für ein elektrisches Wärmespeicher-Heizgeräte nach dem Oberbegriff des Anspruches 1.

Es ist bereits eine Schaltung für ein elektrisches Wärmespeicher-Heizgerät der im Oberbegriff des Anspruches 1 genannten Art bekannt. Hierbei ist das zum Entladen des Wärmespeichers dienende Gebläse so gesteuert, daß es nur im Bereich des höchsten Ladestandes des Wärmespeichers mit seiner Höchstdrehzahl, ansonsten jedoch mit verminderter Drehzahl läuft. Zur Verminderung der Drehzahl ist ein anhängig vom Ladestand des Wärmespeichers in den Stromkreis des Gebläses einschaltbarer Vorschaltwiderstand vorgesehen. Die bekannte Schaltung ist besonders geeignet, wenn innerhalb von 24 Stunden der Wärmespeicher nachts mit Niedertarif-Strom aufgeladen und ab morgens, bis zu Beginn der nächsten nächtlichen Niedertarif-Stromzeit, wieder völlig entladen wird. Durch eine solche Arbeitsweise kann der nächtliche Niedertarif-Strom voll ausgenutzt werden. Im Falle, daß auch tagsüber mit Niedertarif-Strom geladen wird, ist es jedoch nicht möglich, den Wärmespeicher mit verminderter Drehzahl des Gebläses soweit zu entladen, daß er restlos entladen ist, wenn die nächste nächtliche Aufladung mit Niedertarif-Strom beginnt. Mit dem nächtlichen Niedertarif-Strom ist dann nur noch eine Teilmenge nachzuladen, um eine Vollaufladung zu erhalten. Das Nachladen einer Teilmenge erfolgt jedoch schneller als eine Vollaufladung, so daß der Wärmespeicher nicht erst morgens zu Beginn der gewollten Entladung ganz aufgeladen ist, sondern schon früher. Je früher der Wärmespeicher aber bis zu seiner Nennaufladung aufgeladen ist, desto länger wird jedoch die Zeit zwischen dem Ladeende und dem Beginn der gewollten Entladung. Das hat zwei Nachteile. Zum einen ist für die Stromversorgungsunternehmen, wegen der möglichen besseren Lastverteilung, eine längere Ladezeit vorteilhafter als eine kürzere. Zum anderen wird der Wärmespeicher zwischen der Vollaufladung und der gewollten Entladung durch unvermeidliche Wärmeverluste ungewollt vorzeitig - schon teilweise entladen, so daß zu Beginn der gewollten Entladung seine volle Kapazität nicht mehr zur Verfügung steht (DE-OS 32 09 723).

Aufgabe der Erfindung ist es, die Schaltung für ein elektrisches Wärmespeicher-Heizgerät der im Oberbegriff des Anspruches 1 genannten Art so auszubilden, daß der Wärmespeicher dann zu Beginn seiner nächtlichen Aufladung mit Niedertarif-Strom gänzlich entladen ist, wenn während seiner tagsüber erfolgten Entladung mindestens einmal eine Nachladung vorgenommen wurde.

Die gestellte Aufgabe wird erfindungsgemäß durch die im kennzeichnenden Teil des Anspruches 1 angegebene Ausbildung gelöst.

Zweckmäßige Aus-und Weiterbildungen des Erfindungsgegenstandes sind in den Ansprüchen 2 bis 4 angegeben.

Zwei Ausführungsbeispiele der Erfindung sind in der Zeichnung dargestellt.

Es zeigen:

Fig. 1 ein Schaltschema, bei dem einem Regler, der den Wärmeinhalt eines Speichers steuert, ein weiterer Schaltkontakt zugeordnet ist.

Fig. 2 ein Schaltschema mit einem vom Wärmeinhalt eines Speichers gesteuerten separaten Regler.

In der Zeichnung ist mit 1 ein Motor eines ansonsten nicht dargestellten Entladegebläses bezeichnet.

Das zum Motor gehörende Gebläse dient zum Entladen eines ebenfalls nicht dargestellten Wärmespeichers, der mit Heizelementen 2 aufladbar ist.

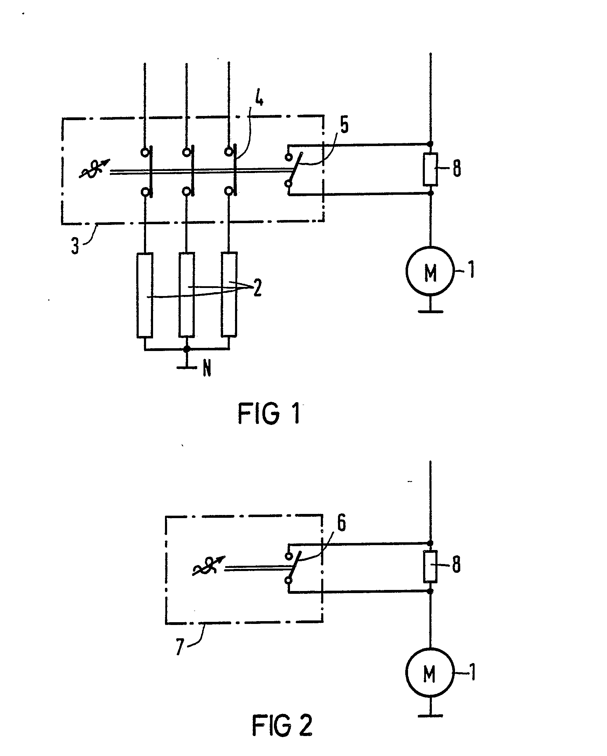

Die Heizelemente 2 werden abhängig vom Ladestand des Wärmespeichers geschaltet. Hierfür ist ein Regler 3 mit Arbeitskontakten 4 vorgesehen (Fig. 1).

Der Motor 1 wird ebenfalls abhängig vom Ladestand des Wärmespeichers geschaltet. Im Falle nach Fig. 1 mit einem zusätzlichen Arbeitskontakt 5 des Reglers 4 und im Falle nach Fig. 2 mit einem Arbeitskontakt 6 eines separaten Reglers 7.

Während des höchsten Ladestandes des Wärmespeichers ist der Motor 1 auf eine erste Drehzahlstufe geschaltet, bei der ein zugelassener, vom Gebläse verursachter Geräuschpegel gerade noch nicht überschritten ist.

Die erste Drehzahlstufe des Motors 1 wird sowhol nach Fig. 1, als auch nach Fig. 2 durch einen Widerstand 8 bestimmt, der dem Motor 1 vorgeschaltet ist.

Bis zu einem vorbestimmten Ladestand des Wärmespeichers bleibt die erste Drehzahlstufe des Motors 1 eingeschaltet. Mit fortschreitender Entladung mindert sich die Drehzahl des Motors 1. Mit kleiner werdender Drehzahl mindert sich zugleich auch der Luftdurchsatz durch den Wärmespeicher, was eine Absenkung des Geräuschpegels ergibt.

Der vorbestimmte Ladestand ist derjenige Ladestand des Wärmespeichers, bei dem die - schon ohnehin abgefallene und bei weiterer Entladung noch weiter abfallende Drehzahl des Entladegebläses nicht mehr ausreicht, den Wärmespeicher bis zu Beginn einer folgenden nächtlichen Aufladeperiode völlig zu entladen.

Um bis zu Beginn einer folgenden nächtlichen Ladeperiode eine vollständige Entladung des Wärmespeichers zu erreichen, wird ab dessen vorbestimmten Ladestand der Motor 1 auf eine zweite Drehzahlstufe geschaltet. Diese Stufe ist so bemessen, daß sich ein Luftdurchsatz ergibt, bei dem der beim höchsten Ladestand des Wärmespeichers gegebene Geräuschpegel in etwa wieder erreicht wird.

Zur Umschaltung von der ersten Drehzahlstufe auf die zweite Drehzahlstufe wird sowohl nach Fig. 1 als auch nach Fig. 2 der Widerstand 8 überbrückt.

Die bisher beschriebene Schaltung ist dann ohne weitere Maßnahmen einsetzbar, wenn ab Erreichen des vorbestimmten Ladestandes die Zeit bis zur kommenden nächtlichen Aufladeperiode nicht mehr ausreicht, den Wärmespeicher mit der ersten Drehzahlstufe des Motors 1 vollständig zu entladen. Das ist gegeben, wenn eine Nachladung mit Niedertarif-Strom erst zu einer verhältnismäßig späten Tageszeit vorgenommen wird. Erfolgt jedoch eine Nachladung mit Niedertarif-Strom schon zu einer verhältnismäßig frühen Tageszeit und ist daher die Entladung des Wärmespeichers bis zu Beginn der folgenden nächtlichen Aufladeperiode noch mit der ersten Drehzahlstufe des Gebläses möglich, kann eine Umschaltung von der ersten Drehzahlstufe auf die zweite Drehzahlstufe unterbleiben. Für diesen Fall wird die Umschaltung auf die zweite nicht nur abhängig vom vorbestimmten Ladestand des Wärmespeichers vorgenommen, sondern auch abhängig vom Beginn und dem Zeitraum einer möglichen Nachladung.

Bezugszeichenliste

    1 = Motor
    2 = Heizelemente
    3 = Regler
    4 = Arbeitskontakte
    5 = zusätzlicher Arbeitskontakt
    6 = Arbeitskontakt
    7 = separater Regler
    8 = Widerstand

## Ansprüche

1. Schaltung für ein elektrisches Wärmespeicher-Heizgerät mit den Merkmalen:
    a) ein Motor (1) eines Endladegebläses ist beim höchsten Ladestand des Wärmespeichers auf eine erste Drehzahlstufe geschaltet, bei der ein zugelassener Geräuschpegel gerade noch nicht überschritten ist;

    b) der Motor (1) weist noch eine zweite Drehzahlstufe auf;
**gekennzeichnet durch** die Merkmale:
    c) die erste Drehzahlstufe bleibt auch während einer mit fortschreitender Entladung des Wärmespeichers einhergehenden, den Geräuschpegel mindernden Absenkung der Gebläse-Drehzahl bis zu einem vorbestimmten Ladestand des Wärmespeichers eingeschaltet;
    d) ab dem vorbestimmten Ladestand des Wärmespeichers wird der Motor (1) auf die zweite Drehzahlstufe geschaltet, die so eingestellt ist, daß der beim höchsten Ladestand des Wärmespeichers durch das Endladegebläse verursachte Geräuschpegel wieder erreicht wird.

2. Schaltung mit einem über einen Fühler den Wärmeinhalt des Wärmespeichers steuernden Regler nach Anspruch 1, **dadurch gekennzeichnet**, daß der Regler (3) einen zusätzlichen Arbeitskontakt (5) aufweist, mit dem zum Umschalten von der ersten Drehzahlstufe auf die zweite Drehzahlstufe ein Vorschaltwiderstand (8) des Motors (1), abhängig vom Ladestand des Wärmespeichers, überbrückbar ist.

3. Schaltung nach Anspruch 1, **dadurch gekenn zeichnet**, daß mit Schaltkontakten eines separaten Reglers (7) ein Vorschaltwiderstand (8) des Motors (1) überbrückbar ist.

4. Schaltung nach Anspruch 1 und einem der Ansprüche 2 oder 3, **dadurch gekennzeichnet**, daß die Umschaltung des Motors (1) auf die zweite Drehzahlstufe sowohl abhängig vom Ladestand des Wärmespeichers, als auch abhängig von der Tageszeit erfolgt.

FIG 1

FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,Y | FR-A-2 523 697 (K.K.W. KULMBACHER KLIMAGERÄTE-WERK GmbH) <br> * Seite 1, Zeile 28 - Seite 3, Zeile 39; Abbildungen 1,2 * | 1-3 | G 05 D 23/275 <br> F 24 H 9/20 |
| | --- | | |
| Y | GB-A-1 373 080 (CREDA ELECTRIC) <br> * Seite 2, Zeilen 25-28,106-115; Seite 4, Zeilen 97-114; Seite 5, Zeilen 23-45; Abbildungen 1,2 * | 1-3 | |
| | --- | | |
| A | EP-A-0 121 612 (ACEC) <br> * Zusammenfassung; Seite 2, Zeilen 30-34; Abbildung 1 * | 1 | |
| | --- | | |
| A | EP-A-0 138 208 (F. SAUTER) <br> * Zusammenfassung; Seite 8, Zeile 23 - Seite 9, Zeile 35; Abbildung 2 * | 4 | RECHERCHIERTE SACHGEBIETE (Int. Cl.4) <br><br> G 05 D <br> F 24 H |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 18-08-1987 | HELOT H.V. |